# EUROPEAN PATENT SPECIFICATION

(11) **EP 2 038 054 B1**
(45) Date of publication and mention of the grant of the patent: **21.03.2012**
(21) Application number: 07786800.8
(22) Date of filing: 22.06.2007
(51) Int. Cl.: B01J 23/00

(54) **A PROCESS FOR THE PREPARATION OF UNIFORM NANO-SIZED SOLID MATERIALS BY CONTINUOUS PRECIPITATION**
VERFAHREN ZUR HERSTELLUNG VON FESTEN MATERIALIEN IM NANOGRÖSSENBEREICH BEI KONTINUIERLICHER FÄLLUNG
PROCÉDÉ DE PRÉPARATION DE MATÉRIAUX NANOMÉTRIQUES SOLIDES PAR PRÉCIPITATION CONTINUE

(30) Priority: 23.06.2006 EP 06115928
(43) Date of publication of application: 25.03.2009
(73) Proprietor: YARA International ASA, 0202 Oslo (NO)
(72) Inventor: PÉREZ RAMÍREZ, Javier, 43007 Tarragona (ES); ABELLÓ CROS, Sonia, 43007 Tarragona (ES); SANTIAGO REDONDO, Marta, 43007 Tarragona (ES); SCHELVER, Morten, N-3946 Porsgrunn (NO); WALLER, David, N-3931 Porsgrunn (NO)
(74) Representative: Onsagers AS
(86) International application number: PCT/EP2007/056228
(87) International publication number: WO 2007/147881

(56) References cited:
- WO-A1-01/46073
- WO-A2-00/61275
- WO-A2-03/057362
- DE-A1-102004 038 029

## Description

### Field of the Invention

The present invention relates to a process for the preparation of nano-sized solid materials with a substantially uniform size distribution and a substantially uniform pore size distribution by continuous precipitation in a microreactor under constant temperature, constant pH and preselected residence time. The present invention is also referred to hidrotalcites, dawsonites and aluminas with a defined morphology, a narrow particle size distribution and specific pore sizes, which can be prepared by the process of the invention.

### Background Art

Precipitation is one of most frequently applied methods for preparing precursors of catalysts and support materials with good dispersion of the components in laboratory as well as industrial scales (R. A. van Santen, P. W. N. M. van Leeuwen, J. A. Moulijn, B. A. Averill, Catalysis: An integrated approach, 2nd ed., Elsevier Science, The Netherlands, 1999; F. Schütz, K. Unger, in Handbook of Heterogeneous Catalysis, Vol. 2 (Eds: G. Ertl, H. Knözinger, J. Weitkamp), Wiley-VCH, Weinheim, 1997, p. 72-86). This method is generally practiced in batch mode and involves feeding a solution containing the cations and a solution containing the precipitating agent (typically hydroxides and/or (bi)carbonates) in a mechanically stirred vessel at constant or variable pH. Time, temperature, stirring speed, pH, and order in which the cationic and anionic solutions are brought into contact are critical parameters that impact on the characteristics of the final material (S. K. Yun, T. J. Pinnavaia, Chem. Mater. 1995, 7, 348). A well-known drawback associated with coprecipitation is related to the presence of pH gradients due to ineffective stirring of the reactor volume. Local pH gradients will result in an inefficient precipitation process (sequential precipitation or no precipitation at all), which can generate the presence of by-products.

An additional drawback in the case of precipitation carried out in batch mode, wherein the precipitating agents are added over the cationic solution in the precipitation vessel or viceversa, is that the pH is not constant during the process, leading to a preferential precipitation of the component with the lower solubility and resulting in the formation of an inhomogeneous product.

Most important, the residence time of the precipitate particles and concentration of reactants change throughout the precipitation process, and the degree of nucleation and mainly crystal growth markedly vary between the start and end products (P. Courty, C. Marcilly, in Preparation of Catalysts III, Stud. Surf. Sci. Catal., Vol. 16 (Eds: G. Poncelet, P. Grange, P. A. Jacobs), Elsevier Science Publishers, Amsterdam, 1983, p. 485-517). This prevents to maintain a constant product quality throughout the precipitation process, which is often essential for the subsequent application of the resulting materials. The above features make the scalability of the processes described in the state of the art very difficult, since the characteristics of the product may vary throughout the precipitation process.

Therefore, new processes are needed to overcome these drawbacks in order to achieve more efficient materials for industrial applications, respectively.

Some processes for the continuous precipitation of more homogeneous materials have been described in the background art. For example, W02004/043597 describes a continuous process for preparing a highly homogeneous amorphous silica-alumina cogel catalyst from three aqueous solutions under vigorous mixing in two reaction chambers.

GB1132831 describes a process for the continuous precipitation of inorganic products in the form of gels wherein the pH is continuously adjusted in the feeding solutions. Said process is performed at residence times from 2 to 4 minutes and the pH is controlled by the addition of reactants.

GB1255620 describes a process for the continuous precipitation of pigments wherein two reaction chambers are employed.

However, said continuous processes do not have a broad applicability, use substantially long residence times, comprise more than one reaction chamber, measure the pH inside the reaction chamber and/or control the pH through addition of reactants, and scalability of the process is laborious.

The application WO 03/057362 describes a method and apparatus for the production of nanoparticles using a continuous flow miniaturised reaction vessel in a ultra miniaturised reactor (with volumes from 1x10⁻⁵ to 1x 10⁻¹¹ litres) with therefore extremely short residence times, which is applied for the preparation of a limited number of materials.

The application DE 102004038029 describes a method and the corresponding apparatus for the continuous precipitation of nano-size products in a microreactor and is therefore deemed to be the closest prior art. Said method is characterised in that primary particles are prepared from liquid flows introduced in the microreactor at high pressures by means of pumps and nozzles. Due to the high pressures, the average residence time is very low (at the milliseconds level) and can just be regulated in a narrow range.

### Summary of the Invention

The problem to be solved by the present invention is therefore to provide a process for the preparation of nano-sized solid materials with a homogeneous morphology, a uniform particle size and a uniform pore size distribution through a simpler and more versatile method than the prior art which allows the preparation of a vast range of materials with properties which can be broadly tuned, giving rise to materials with improved properties with regard to the materials currently applied in industry.

This problem is solved by the process for the preparation of nano-sized solid materials according to a first aspect of the present invention, by continuous precipitation under constant temperature and constant pH which comprises
- feeding at least two solutions at atmospheric pressure to a small reactor with a volume from 0.5 to 100 ml with controlled feeding rates to obtain a preselected residence time in the small reactor of less than 36 s,
- stirring the solutions in the small reactor by a rotating element to obtain impeller Reynolds numbers greater than 10⁴, and
- maintaining a constant pH of the mixture by use of an in-line pH probe located at the outlet of the small reactor which regulates the feeding rate of the solutions accordingly.

Surprisingly, by performing the precipitation in continuous mode in a micro-reactor under constant temperature, constant pH and preselected residence time, these two last parameters being controlled by the flow of the feeding solutions and under stirring, nano-sized solid materials with a homogeneous morphology, a uniform size distribution and a uniform pore size distribution are obtained. The small size of the reactor provides a more efficient stirring, avoiding the production of pH gradients or dead volumes in the reaction chamber.

An advantage of the process according to the present invention is that it enables to tune the size, morphology and composition of the final precipitate by varying the residence time, pH, and stirring speed. The first two variables are determined by the concentration of and the flow of the feeding solutions. The possibility of tuning these properties allows the preparation of diverse materials with controlled size, morphology and composition.

Advantageously, the method of the present invention allows to select a broad range of residence times depending on the pumping rate. For a given pH value and stirring speed, depending on the selected residence time, materials with different properties regarding size, morphology, surface area and pore size can be obtained.

Therefore, the method of the invention is very versatile, allowing not only to manufacture materials with uniform properties but also to obtain materials with largely different properties from one material to another.

Accordingly, materials with unprecedented properties and superior performances in industrial applications, especially in catalytic applications can be prepared through the method of the invention.

A further advantage of the process according to the present invention is the fact that the process is continuous, so that a relatively small precipitation reactor can be used while still having large amounts of precipitate produced in a short period of time. The processes described in most methods of the background art are typically performed in relatively large vessels in order to obtain large amounts of product. However, large volumes do not provide an efficient mixing of solutions and also originate dead volumes in the precipitation vessel. Advantageously, the process of the invention is in perfect match with the trend of intensifying unit operations in industry, as miniaturization of the precipitation chamber leads to markedly increased productivities as compared to conventional batch precipitation. Particularly, the embodiment of this method enables to achieve productivities of several tons of product per hour and m³ of reactor, up to three orders of magnitude higher than those obtained by typical discontinuous precipitation in large vessels.

An additional advantage of the process of the present invention is that a high degree of precipitation is achieved, preferably higher than 90%, most preferably higher than 99%, so that loss of reactants and waste generation is minimized.

Further advantages of the process according to the present invention are simplicity, reproducibility, versatility, and scalability. Advantageously, due to the homogeneity of the materials obtained, the process according to the present invention is very susceptible of industrial application.

Prior to a discussion of the detailed embodiments of the process according to the invention, a definition of specific terms related to the main aspects of the invention is provided.

A "micro-reactor" as defined in the present invention refers to a small reaction chamber with a volume from 0.5 to 100 ml, preferably from 0.5 to 20 ml.

The "degree of supersaturation" of a solution as defined in the present invention refers to the ratio between the actual concentration of a solution and the equilibrium concentration of the corresponding saturated solution.

The reaction chamber is stirred to impeller Reynold numbers greater than 10⁴, characteristic of turbulent regime, which ensures a highly effective stirring. For example, the reaction chamber can be provided with a high-speed disperser and static blades in the periphery of the main axis to achieve impeller Reynold numbers from 10⁴ to 10⁵. The term "impeller Reynold number" is known for a medium-skilled person in the art.

Moreover, the preselected residence time, controlled by the flow of the feeding solutions, allows the production of tuneable uniform precipitated particles. The process according to the invention, the residence time is short, preferably not higher than 36 s, more preferably not higher than 20 s. A medium-skilled person in the art will be able to find by way of experimentation the optimal range of residence time for the preparation of a particular material with predefined properties. A medium-skilled person in the art will understand that the optimal range of residence time depends on the particular material to be prepared.

In a preferred embodiment of the present invention, two feeding solutions are employed, preferably two aqueous solutions, more preferably an acid solution and a base solution. However, it will be apparent for a medium skilled person that the process according to the invention is not limited to two solutions, but further solutions can be additionally employed.

In the processes described in the background art, the pH probe is usually located inside the reaction chamber. The pH is measured in-line at the outlet of the reaction chamber. Due to the continuous regime, the small size of the reaction chamber and the location of the pH probe directly at the outlet of the reaction chamber and therefore very close to it, the pH measurement is representative of the pH in the reaction chamber. The location of the pH probe outside the reaction chamber avoids the interference of the pH probe with the stirring mechanism and prevents the formation of pH gradients or dead volumes.

According to a preferred embodiment of the present invention, a high degree of supersaturation is employed, as higher supersaturations lead to larger amounts of small nuclei of uniform size.

In a preferred embodiment, the process according to the present invention is applied to the preparation of catalysts, catalyst precursors, catalysts supports and precursors of catalyst supports. Typically, the process for the preparation of catalysts and catalysts supports according to the present invention further comprises an activation step, for example a conventional ageing period or the use of microwave irradiation or ultrasound treatment, a thermal treatment or a combination thereof. Said activation steps have been described in the background art and are known to a medium-skilled person in the art.

Some examples of catalysts that can be prepared by the method of the present invention are oxide catalysts, hydroxides, hydrated oxides, hydroxycarbonates and oxohydroxides, oxoperoxohydroxides, nitrides, carbides, sulfides of metals. A medium skilled person in the art, according to his general knowledge and the documents of the background art, will understand that the terms "substantially uniform size distribution" and "substantially uniform pore size distribution" would depend upon the particular material prepared.

For example, the process according to the present invention can be applied to the preparation of hydrotalcites with defined homogeneous morphology, defined uniform particle size and defined pore size distribution.

Hydrotalcites ([M²⁺₁₋ₓM³⁺ₓ(OH)₂][X^{m-}]_{x/m}·nH₂O) have been widely applied as adsorbent, anion exchangers, flame retardant, and catalyst and catalyst support in environmental as well as in fine and bulk chemistry applications (see for example F. Cavani, F. Trifirò, A. Vaccari, Catal. Today 1991, 11, 173; P. S. Braterman, Z. P. Xu, F. Yarberry, in Handbook of Layered Materials (Eds: S. M. Auerbach, K. A. Carrado, P. K. Dutta), Taylor & Francis, New York, 2004, p. 313-372; F. Kovanda, D. Kolousek, Z. Cílová, V. Hulínský, Appl. Clay Sci. 2005, 28, 101; F. Prinetto, G. Ghiotti, P. Graffin, D. Tichit, Microporous Mesoporous Mater. 2000, 39, 229; L. Hickey, J. T. Kloprogge, F. R.L., J. Mater. Sci. 2000, 35, 4347). They are often synthesized by batch coprecipitation and several parameters have been varied in the preparation in order to alter the physicochemical characteristics of the final product, such as conducting the precipitation at different pH, levels of supersaturation and temperature or by means of sol-gel synthesis. Post-synthesis modifications such as ageing and hydrothermal treatments have also been performed, in conjunction with application of microwaves or ultrasounds. Very recently, Duan et al. (D. G. Evans, X. Duan, Chem. Commun. 2006, 485) proposed a discontinuous method using a colloid mill to prepare hydrotalcites with a narrow range of large crystallites (60-80 nm). However, the hydrotalcites prepared by the methods described in the background art prove ineffectual to control homogeneity, porosity, thermal stability and derived catalytic performance.

Advantageously, the process of the invention allows the preparation of hydrotalcites with homogeneous morphology, a uniform size distribution and a uniform pore size distribution. Moreover, the process of the invention allows tuning said properties.

Hydrotalcites with a molar M^{2+/}M³⁺ (M²⁺ = Mg, Ni, Co, and M³⁺= Al, Fe) ratio in the range 1 to 5, more preferably from 2 to 3, having a crystallite size from 3 nm to 4 nm assembled into crystals from 20 nm to 45 nm of size with substantially smooth surfaces (substantially no porosity) and a surface area of 0.1-3 m² g⁻¹ can be prepared by the process of the present invention for example from two feeding solutions: a mixture of an aqueous solution of Mg(NO₃)₂ and an aqueous solution of Al(NO₃)₃ and a second aqueous solution of the precipitating agent (NaOH + Na₂CO₃) at room temperature, pH= 10 , stirring speed in the range of 300-24,000 rpm by fixing an ultra-short residence time not higher than 4.5 s, preferably 1 s. A medium skilled person in the art will appreciate that said hydrotalcites have a substantially uniform size distribution and substantially uniform pore size distribution. Moreover, said hydrotalcites, which can be suitably prepared by the method of the invention, have no precedent in the background art.

Surprisingly, said hydrotalcites have crystallites with a very narrow particle size, and homogeneous morphology with a marked degree of face-to-face agglomeration. Moreover, said hydrotalcites have an unprecedented property related to the low surface areas (in the range 0.1-3 m² g⁻¹). Advantageously, said hydrotalcites can be used in ceramic films and nanolithographic processing. The properties of the hydrotalcites described in the background art were not optimal for the above applications and therefore, the properties of the hydrotalcites described above expand the already broad applications of hydrotalcite-like compounds.

Hydrotalcites with a molar M²⁺/M³⁺ (M²⁺ = Mg, Ni, Co, and M³⁺= Al, Fe) ratio in the range 1 to 5, more preferably from 2 to 3 having a crystallite size from 5 nm to 11 nm assembled into platy particles having a size from 20 to 30 nm long and from 10 to 20 nm thick, with a pore size distribution from 5 to 200 nm, surface areas in the range from 85 to 130 m² g⁻¹, preferably about 130 m² g⁻¹ and a total pore volume of 0.30 to 0.78 cm³ g⁻¹, preferably about 0.45 cm³ g⁻¹ can be prepared by the process of the present invention, for example from two feeding solutions: a mixture of an aqueous solution of Mg(NO₃)₂, and an aqueous solution of Al(NO₃)_{3,} and a second aqueous solution of the precipitating agent (NaOH + Na₂CO₃) at room temperature, pH= 10 , stirring speed in the range of 300-24,000 rpm and residence times from 12 to 18 s. Advantageously, the properties of said hydrotalcites hydrotalcites make them very suitable for catalytic applications in different fields, e.g. as catalyst supports or catalyst precursors.

A medium skilled person in the art will appreciate that said hydrotalcites have a substantially uniform size distribution and substantially uniform pore size distribution. Moreover, said hydrotalcites, which can be suitably prepared by the method of the invention, have no precedent in the background art.

The process according to the present invention can be also applied, for example, to the preparation of dawsonites with defined homogeneous morphology, defined particle size and defined uniform pore size distribution. The general formula of dawsonites is ABM(CO₃)(OH)2_{,} wherein A is NH₄⁺, an alkaline metal ion (Na⁺, K⁺), or an alkaline earth metal ion (Mg²⁺, Ca²⁺, Ba²⁺), B is a divalent transition metal ion (Ni2⁺, Co²⁺, Mn²⁺, Cu2⁺, etc), and M is a trivalent transition or non-transition metal ion (La³⁺, Fe³⁺, etc).

Dawsonites, for example AACH (ammonium aluminium carbonate hydroxide), the NH₄-analogue of the dawsonite mineral, have been used as precursors of alumina, the most common catalyst support in the chemical and petrochemical industries, as well as for automotive emission control (M. Giannos, M. Hoang, T.W. Turney, Chem. Lett., 1998, 793).

AACH has been synthesized by conventional batch precipitation of the aluminium source (typically NH₄Al(SO₄)₂, but also Al(OH)₃, AlCl₃, or Al(NO₃)₃) with NH₄HCO₃ solutions at pH of 8-11 (M. Giannos, M. Hoang, T.W. Turney, Chem. Lett., 1998, 793; C. Ma, X. Zhou, X. Xu, T. Zhu, Mater. Chem. Phys., 2001, 72, 374; X. Zhang, Z. Wen, Z. Gu, X. Xu, Z. Lin, J. Solid State Chem., 2004, 177, 849). Following this route, Giannos et al. obtained AACH-derived aluminas with 450 m² g⁻¹ and 145 m² g⁻¹ after calcination at 973 K and 1273 K, respectively. Pitsch et al. (I. Pitsch, W. Gessner, A. Brückner, H. Mehner, S. Möhmel, D. Uecker, M. Pohl, J. Mater. Chem., 2001, 11, 2498) prepared bimetallic Fe-Al dawsonites by discontinuous precipitation using NH₄Fe(SO₄)₂ as the iron source. Upon calcination at 873 K, Fe₂O₃/Al₂O₃ catalysts (1-10 wt.% Fe) with relatively high surface areas (up to 400 m² g⁻¹) were attained. However, the dawsonites prepared by the methods described in the background art still present deficiencies with regard to dispersion, porosity, thermal stability and derived catalytic performance. Consequently, the aluminas prepared from the dawsonites of the background art exhibit surface areas and total pore volume that don't provide for optimal performance in industrial applications, specially in catalytic applications.

An example of a dawsonite material which can be suitably prepared by the method of the invention, have general formula NH₄⁺MₓNyAl_{1-x-y}(CO₃)(OH)₂, wherein M is a divalent metal ion (Ni²⁺, Co²⁺, Mn²⁺, Cu²⁺, etc), N is a trivalent metal ion (La³⁺, Fe³⁺, etc) and x and y are independently from 0 to 1, characterized in that it comprises crystallites having a size from 8 nm to 12 nm assembled into particles having a size from 20 to 30 nm, with a pore size distribution from 4 to 20 nm, preferably from 5 to 15 nm, a surface area of at least 650 m² g⁻¹ and a total pore volume of at least 1,7 cm³ g⁻¹. A medium skilled person in the art will appreciate that said dawsonites have a substantially uniform size distribution and substantially uniform pore size distribution. Moreover, said dawsonites, which can be suitably prepared by the method of the invention, have no precedent in the background art.

The dawsonite material can be prepared by the process of the present invention, for example from three aqueous solutions: an acidic aqueous solution of Al-nitrate, an acidic aqueous solution of the corresponding M- and/or N- nitrate and an aqueous solution of ammonium carbonate (NH₄)₂CO₃, at 333 K, pH = 7.5-8, stirring speed of 13,500 rpm and residence time of 18 s.

An example of dawsonites are of formula NH₄Mn_{0.1}Al_{0.9}(OH)₂CO₃, have a surface area in the range from 500 to 1300 m² g⁻¹ and a total pore volume up to 2,5 cm³g⁻¹.

The dawsonites have a homogeneous morphology, a uniform size distribution and a uniform pore size distribution. On the other hand, the dawsonites show impressive surface areas and total pore volumes in contrast to the background art. Reported values for AACH precursors for α or β-alumina are in the range of 240-315 m² g⁻¹ (G. Groppi, C. Cristiani, P. Forzatti, M. Bellotto, J. Mater. Sci., 1994, 29, 3441; G. Groppi, C. Cristiani, P. Forzatti, Appl. Catal. B, 2001, 35, 137). Advantageously, the porous characteristics of dawsonites are exceptional for clays (not only in terms of quantity but also quality) and ressemble more those of top-class mesoporous active carbons.

An alumina material optionally modified with at least one metal, with surface area from 350 to 550 m² g⁻¹ and total pore volume from 0.9 to 1.6 cm³ g⁻¹, characterized by crystallites with a size lower than 2 nm assembled into ultrafine particles having an average uniform size of less than 10 nm.

Said alumina material can be prepared by the process of the present invention, for example by:
(a) Precipitation of dawsonites of general formula NH₄⁺MₓN_{y}Al_{1-x-y}(CO₃)(OH)₂, (wherein M is a divalent metal ion, N is a trivalent metal ion, x and y are independently from 0 to 1 and x+y is lower than 1) from three aqueous solutions: an acidic aqueous solution of Al-nitrate, an acidic aqueous solution of the corresponding M- and/or N-nitrate and an aqueous solution of ammonium carbonate (NH₄)₂CO₃, at 333 K, pH = 7.5-8, stirring speed of 13,000 rpm and residence time of 18 s;
(b) thermal decomposition of said dawsonites.

A medium skilled person in the art will appreciate that said alumina material have a substantially uniform size distribution and substantially uniform pore size distribution. Moreover, said alumina material, which can be suitably prepared by the method of the invention, have no precedent in the background art.

The following examples and drawings are provided by way of illustration and are not intended to limit the scope of the invention. It is intended that the scope of the present invention be defined by the claims appended hereto.

### Brief description of the drawings

Figure 1 is a schematic representation of a micro-reactor set-up according to Example 1.

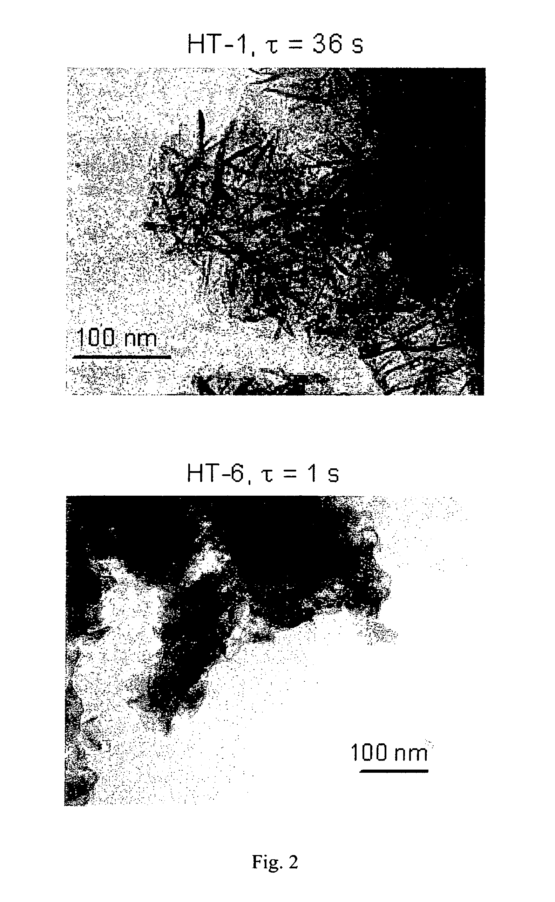

Figure 2 shows the TEM micrograph of hydrotalcites HT-1, τ= 36 s (top) and HT-6, τ= 1 s (bottom) according to Example 2.
Figure 3 shows the surface area and total pore volume of the hydrotalcites prepared in Example 2 as a function of the residence time.
Figure 4 shows the TEM micrographs of Fe-Al-DW of Example 3 (top) and Fe-Al-DW oxide of Example 4 (bottom).
Figure 5 shows the surface area and total pore volume of the dawsonites according to Example 3 and the corresponding oxides of Example 4, at different calcination temperatures. Dashed lines indicate typical S_{BET} and Vₚₒᵣₑ of conventional γ-Al₂O₃ (catalyst support grade).

### Detailed description of particular examples

### Example 1. Set-up for the process according to the invention

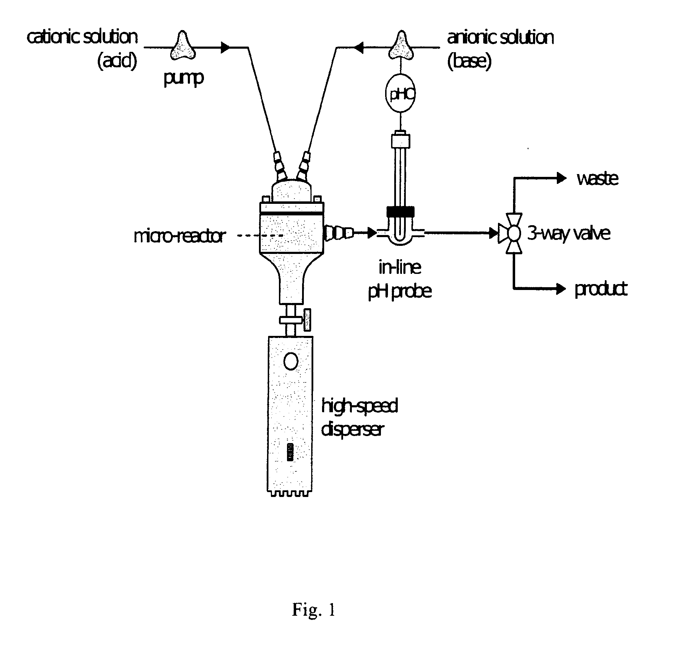

An example of a set-up for performing the process of the invention is schematised in Figure 1. In a preferred embodiment of the present invention, an acid and a base solution are fed by means of peristaltic pumps into a micro-reactor with a volume from 0.5 ml to 20 ml. The precipitation chamber incorporates a rotating element attached to a high-speed disperser (300-24,000 rpm), and static blades in the periphery of the main axis. This enables an impressively high degree of mixing, leading to impeller Reynolds numbers up to 10⁵. An in-line probe measures the pH of the slurry directly at the outlet of the micro-reactor and is connected to one of the pumps to maintain a constant pH.

### Example 2. Preparation of hydrotalcites

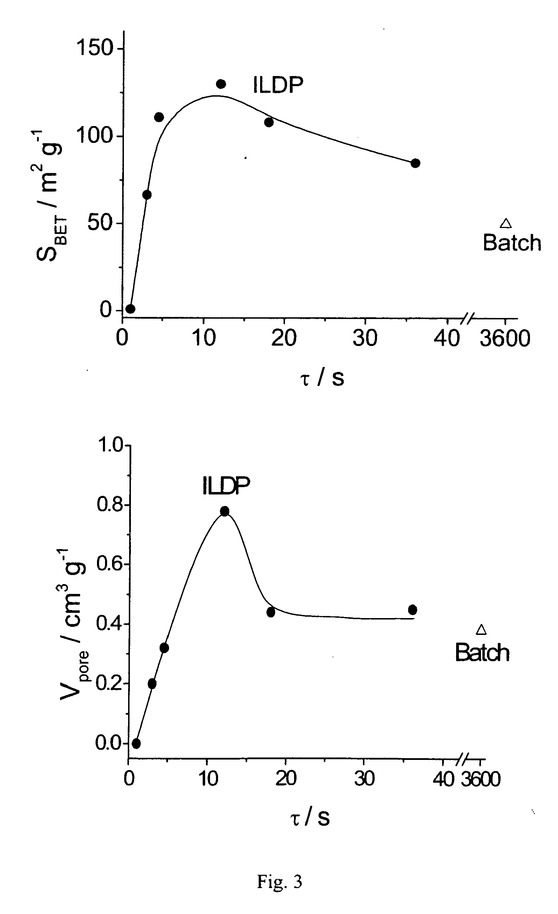

Mg-Al hydrotalcites with a nominal molar Mg/Al ratio = 3 were prepared by the method of the invention. Aqueous solutions of Mg(NO₃)₂·6H₂O (0.75 M) and Al(NO₃)₃·9H₂O (0.25 M) and the precipitating agent (NaOH + Na₂CO₃, 1 M of each) were continuously fed at room temperature to the precipitation chamber keeping a constant pH of 10. The precipitation chamber was stirred at speeds in the range of 300-24,000 rpm. Residence time in the micro-reactor was varied in the range of 1-36 s. Filtration of the resulting slurry was carried out after the in-line pH probe upon reaching stable pH. The resulting solid was thoroughly washed and dried at 353 K. For comparative purposes, a reference Mg-Al hydrotalcite was prepared by conventional batch coprecipitation at pH = 10. The properties of the prepared hydrotalcites are summarized in Table 1 and Figure 3.

A visual inspection of the samples already reveals the striking impact of applying extreme residence times on the resulting products. The solid obtained by *flash* precipitation (τ = 1 s) is translucent and shiny (as compared to the typical opaque appearance of the sample precipitated at longer residence times or discontinuously). The mechanical properties of the precipitated solid at shorter or longer residence times also differed dramatically. The particles precipitated at longer residence times or discontinuously can be easily fractured as compared to the much harder product obtained by coprecipitation at τ = 1 s.

**Table 1. Properties of the differently synthesized hydrotalcites.**

| | *HT-batch* | HT-1 | HT-2 | HT-3 | HT-4 | HT-5 | HT-6 |
|---|---|---|---|---|---|---|---|
| τ^{a} (s) | 3600^{f} | 36 | 36 | 12 | 4.5 | 4.5 | 1 |
| ω̅^{b} (rpm) Molar | 500 | 13,500 | 24,000 | 24,000 | 13,500 | 24,000 | 24,000 |
| Mg/Al ratio | 2.8 | 2.8 | 2.7 | 2.8 | 2.6 | 2.7 | 2.7 |
| D̅^{c} (nm) | 38 | 6.4 | 11.0 | 5.2 | 5.8 | 5.3 | 3.9 |
| S_{BET}^{d} | 50 | | | | | | |
| (m² g⁻¹) g⁻¹) | | 69 | 85 | 130 | 9 | 111 | 0.6 |
| Vₚₒᵣₑ^{e} | 0.38 | | | | | | |
| (cm³g⁻¹) | | 0.29 | 0.45 | 0.78 | 0.01 | 0.32 | 0.0 |

| | | | | | | | |
|---|---|---|---|---|---|---|---|
| ^{a} Residence time; ^{b} Stirring speed; ^{c} Average crystallite size from the Scherrer equation applied in the (003) reflection; ^{d} Specific surface area by the BET method (S. Brunauer, P. H. Hemmet, E. Teller, J. Am. Chem. Soc. 1938, 60, 309.); ^{e} Total pore volume; ^{f} Duration of the addition of acid and base solutions to the precipitation vessel. | | | | | | | |

At residence times up to τ = 18 s, very small crystallites of ca. 4 nm were obtained in contrast to the larger crystallites obtained at longer residence times or discontinuously. The porous properties of the samples in the optimum τ range of 4.5-18 s (S_{BET} and Vₚₒᵣₑ up to 130 m² g⁻¹ and 0.78 cm³g⁻¹, respectively) are superior to those of the samples using τ = 36 s and that prepared by batch precipitation (S_{BET} = 50 m²g⁻¹ and Vpₒᵣₑ = 0.39 cm³g⁻¹)

### Example 3. Preparation of dawsonites

Metal-substituted dawsonites with general formula NH₄MₓAl₁₋ₓ(OH)₂CO₃ (M = Fe, Co, Mn) were prepared by the process of the invention, using the same reagents as reported in the background art. Aqueous solutions of the corresponding cations (1.1 M in Al-nitrate and 0.1 M in M-nitrate) acidified with nitric acid (pH = 1) and ammonium carbonate (NH₄)₂CO₃ solution (2 M) were fed at 333 K. Syntheses were carried out at constant pH = 7.5-8 and stirring speed of 13,500 rpm. The residence time in the micro-reactor was fixed at 18 s. This is an essential distinctive feature with respect to conventional discontinuous precipitation. Upon reaching stable pH, product was collected. The resulting slurry was aged at 333 K for 3 h, followed by filtration, thorough washing, and drying at 378 K for 12 h. For comparative purposes, some of the dawsonite materials were also prepared by batch coprecipitation (I. Pitsch, W. Gessner, A. Brückner, H. Mehner, S. Möhmel, D. Uecker, M. Pohl, J. Mater. Chem., 2001, 11, 2498). The precipitation step in the latter lasted ca. 30 min.

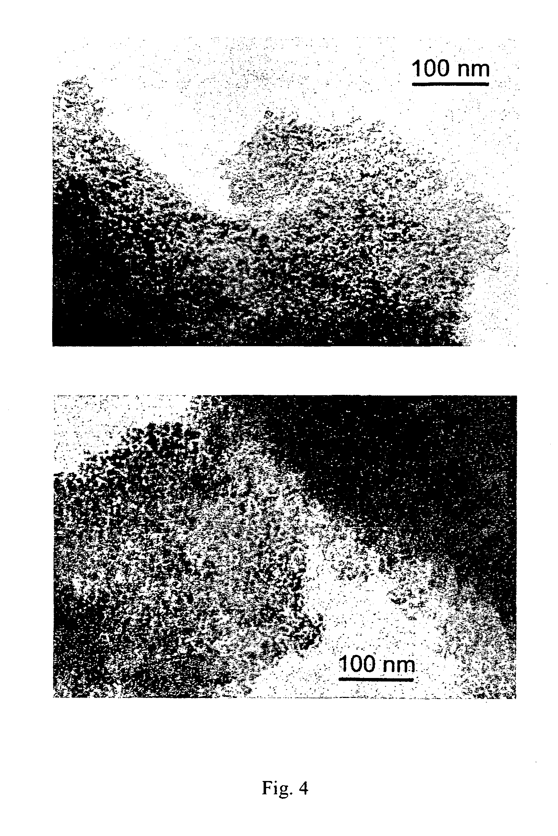

The metal content in the dawsonite precursors determined by ICP-OES matched the nominal values (Table 2), indicating the precipitation step was carried out effectively. As shown in the XRD pattern of Fe-Al-DW at 298 K, the dried precipitates exhibited hydrated dawsonite as the only crystalline phase and the associated reflections were relatively broad. Very small crystallites of 5-6 nm were estimated in all the dawsonites using the Scherrer equation in the (111) reflection at 15° 2θ, in contrast with the 3 times larger crystallites obtained by batch coprecipitation of the same material. The FT-IR spectrum of the as-synthesized samples are consistent with XRD, exhibiting characteristic bands of dawsonite. The TEM micrograph of as-synthesized Fe-Al-DW in Fig. 4 (top) confirms the presence of uniform and ultra-fine particles <10 nm with a remarkable uniformity. The image enables to conclude that the sample exhibits a remarkable degree of porosity, too.

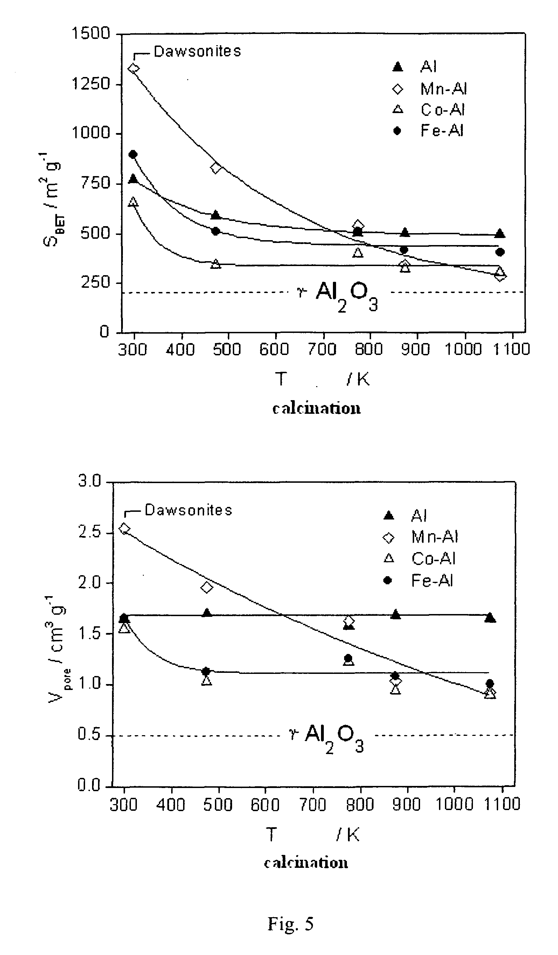

Figure 5 shows the porous properties of the ILDP-derived metal-substituted dawsonites and the corresponding oxides, as determined by N₂ adsorption at 77 K. Mn-Al-DW presents an impressive BET surface area and total pore volume (ca. 1300 m² g⁻¹ and 2.5 cm³ g⁻¹, respectively). The other samples, included the non-substituted Al-DW, exhibit S_{BET} in the range of 650-900 m² g⁻¹ and Vₚₒᵣₑ of 1.7 cm³ g⁻¹. The same dawsonite formulations prepared by us via conventional batch precipitation did not exceed 300 m² g⁻¹ and did not exceed a total pore volume of 1 cm³ g⁻¹.

**Table 2. Chemical composition in the as-synthesized materials**

| Sample | Molar Al/M nominal | Al (wt %) | Metal (wt %) | Molar Al/M in solid |
|---|---|---|---|---|
| Al-DW | - | 31.25 | - | - |
| Fe-Al-DW | 11 | 30.7 | 5.8 | 11.0 |
| Co-Al-DW | 11 | 29.9 | 5.9 | 11.1 |
| Mn-Al-DW | 11 | 26.7 | 5.3 | 10.2 |

| | | | | |
|---|---|---|---|---|
| * DW = dawsonite | | | | |

### Example 4. Preparation of high dispersed metals in alumina from dawsonites of Example 3 and catalytic performance

The dawsonites prepared according to Example 3 were thermally decomposed to the corresponding oxides.

The obtained oxides present 2-3 fold higher surface areas and total pore volumes than conventional γ-aluminas used as catalyst support (see figure 5, solid circles and dashed line). It should be stressed that although the S_{BET} and Vₚₒᵣₑ values are lower upon calcination of dawsonites, the type of porosity in the oxide is maintained. This can be concluded from the identical shape of the isotherms of as-synthesized and calcined materials. Accordingly, mesoporous oxides with a relatively narrow distribution of pores centred at 7 nm were obtained. In contrast, the batch precipitated dawsonites after thermal decomposition exhibit broad distributions with large pore sizes (centred at 80 nm), indicative of highly heterogeneous materials.

The TEM in Fig. 4 (bottom) nicely shows that the NH₄Fe_{0.1}Al_{0.9}(OH)₂CO₃ sample maintains the same size and morphology upon calcination to Fe-Al-DW oxide at 873 K. Accordingly, it can be stated that the preparation process strongly influences the metal dispersion and the sintering behaviour of the resulting product.

Catalytic tests in direct N₂O decomposition as a model reaction have evidenced that the Fe-Al-DW oxide prepared as indicated above show a ca. 3 and 10-fold higher specific activity, i.e. per mol of iron in the sample, than the batch-derived Fe-Al-DW oxide and a reference Fe₂O₃/Al₂O₃ prepared by impregnation of iron nitrate on commercial γ-alumina, respectively. This demonstrates that the distinct characteristics of the oxide material prepared by the process of the invention with respect to component dispersion and porosity are translated into more efficient catalysts.

## Claims

1. A process for the preparation of nano-sized solid materials by continuous precipitation under constant temperature and constant pH, wherein the method comprises:
- feeding at least two solutions at atmospheric pressure to a small reactor with a volume from 0.5 to 100 ml with controlled feeding rates to obtain a preselected residence time in the small reactor of less than 36 s,
- stirring the solutions in the small reactor by a rotating element to obtain impeller Reynolds numbers greater than 10⁴, and
- maintaining a constant pH of the mixture by use of an in-line pH probe located at the outlet of the small reactor which regulates the feeding rate of the solutions accordingly.

2. A process according to claim 1, wherein the nano-sized solid materials are selected from the group comprising catalysts, catalyst precursors, catalyst supports and precursors of catalysts supports.

3. A process according to claim 2, wherein the nano-sized solid materials are selected from the group comprising oxide catalysts, hydroxides, hydrated oxides, hydroxycarbonates and oxohydroxides, oxoperoxohydroxides, nitrides, carbides, sulfides of metals.

4. A process according to claim 2 or 3, further comprising an activation step selected from the group comprising conventional ageing, microwave irradiation, ultrasound treatment, thermal treatment or a combination thereof.

5. A process according to claim 1, wherein
- the solutions fed to the small reactor are a mixture of an aqueous solution of Mg(NO₃)₂ and an aqueous solution of Al(NO₃)₃, and a second aqueous solution of the precipitating agent (NaOH + Na₂CO₃) at room temperature,
- the stirring speed is in the range of 300-24,000 rpm,
- the residence time is below 4.5 s, preferably below 1 s, and
- the pH is maintained at pH 10, for preparation of a hydrotalcite material with a molar Mg/Al ratio in the range 1 to 5, comprising crystallites having from 3 nm to 4 nm size assembled into crystals from 20 nm to 45 nm size, with substantially smooth surfaces and a surface area of 0.1-3 m² g⁻¹.

6. A process according to claim 1, wherein
- the solutions fed to the small reactor are a mixture of an aqueous solution of Mg(NO₃)₂ and an aqueous solution of Al(NO₃)₃, and a second aqueous solution of the precipitating agent (NaOH + Na₂CO₃) at room temperature,
- the stirring speed is in the range of 300-24,000 rpm,
- the residence time is from 12 to 18 s, and
- the pH is maintained at pH 10, for preparation of a hydrotalcite material with a molar Mg/Al ratio in the range 1 to 5, comprising crystallites having a size from 5 nm to 11 nm assembled into platy particles having a size from 20 to 30 nm long and from 10 to 20 nm thick, with a pore size distribution from 5 to 200 nm, surface areas in the range from 85 to 130 m² g⁻¹ and a total pore volume of 0.30 to 0.78 cm³ g⁻¹.

7. A process according to claim 1, wherein
- the solutions fed to the small reactor are an aqueous solution of Al(NO₃)₃, an aqueous solution of a M-nitrate and/or a N-nitrate, where M is a divalent metal ion selected from one of: Ni²⁺, Co²⁺, Mn²⁺, Cu²⁺, and N is a trivalent metal ion selected from one of: La³⁺, Fe³⁺, and an aqueous solution of (NH₄)₂CO₃ at temperature 333 K,
- the stirring speed is 13,500 rpm,
- the residence time is 18 s, and
- the pH is maintained at from pH 7.5 to 8, for preparation of a dawsonite material with the general formula NH₄⁺MₓN_{y}Al_{1-x-y}(CO₃) (OH)₂, where x and y are independently from 0 to 1, comprising crystallites having a size from 8 nm to 12 nm assembled into particles having a size from 20 to 30 nm, with a pore size distribution from 4 to 20 nm, a surface area of at least 650 m² g⁻¹ and a total pore volume of at least 1,7 cm³ g⁻¹.

8. A process according to claim 1, wherein
- the solutions fed to the small reactor are an aqueous solution of Al(NO₃)₃, an aqueous solution of a M-nitrate and/or a N-nitrate, where M is a divalent metal ion selected from one of: Ni²⁺, Co²⁺, Mn²⁺, Cu²⁺, and N is a trivalent metal ion selected from one of: La³⁺, Fe³⁺, and an aqueous solution of (NH₄)₂CO₃ at temperature 333 K,
- the stirring speed is 13,000 rpm,
- the residence time is 18 s, and
- the pH is maintained at from pH 7.5 to 8, for preparation of an alumina material optionally modified with at least one metal, with a surface area from 350 to 550 m² g⁻¹ and a total pore volume from 0_{.}9 to 1.6 cm³ g⁻¹, comprising crystallites with a size lower than 2 nm assembled into ultrafine particles having an average uniform size of less than 10 nm.

## Patentansprüche

1. Verfahren zur Herstellung von Feststoffen in Nanogröße durch kontinuierliche Fällung unter konstanter Temperatur und konstantem pH, wobei das Verfahren:
- das Einspeisen von mindestens zwei Lösungen bei atmosphärischem Druck in einen kleinen Reaktor mit einem Volumen von 0,5 bis 100 ml mit kontrollierten Einspeiseraten zum Erhalt einer im Voraus gewählten Verweilzeit in dem kleinen Reaktor von weniger als 36 s,
- das Rühren der Lösungen in dem kleinen Reaktor mit einem rotierenden Element zum Erhalt von Reynolds-Zahlen des Rührvorgangs von größer als 10⁴ und
- das Aufrechthalten eines konstanten pH des Gemisches durch die Verwendung einer In-linepH-Sonde, die sich am Auslass des kleinen Reaktors befindet, wodurch die Einspeiserate der Lösungen entsprechend reguliert wird,
umfasst.

2. Verfahren nach Anspruch 1, wobei die Feststoffe in Nanogröße ausgewählt sind aus der Gruppe, umfassend Katalysatoren, Katalysator-Präkursoren, Katalysatorträger und Präkursoren für Katalysatorträger.

3. Verfahren nach Anspruch 2, wobei die Feststoffe in Nanogröße ausgewählt sind aus der Gruppe, umfassend Oxidkatalysatoren, Hydroxide, Oxidhydrate, Hydroxycarbonate und Oxohydroxide, Oxoperoxohydroxide, Nitride, Carbide, Sulfide von Metallen.

4. Verfahren nach Anspruch 2 oder 3, ferner umfassend einen Aktivierungsschritt, ausgewählt aus der Gruppe, umfassend herkömmliches Altern, Mikrowellenbestrahlung, Ultraschallbehandlung, Wärmebehandlung oder eine Kombination davon.

5. Verfahren nach Anspruch 1, wobei
- die Lösungen, die in den kleinen Reaktor eingespeist werden, ein Gemisch aus einer wässerigen Lösung von Mg(NO₃)₂ und einer wässerigen Lösung von Al(NO₃)₃ und einer zweiten wässerigen Lösung des Fällungsmittels (NaOH + Na₂CO₃) bei Raumtemperatur sind,
- die Rührgeschwindigkeit im Bereich von 300 - 24.000 U/min liegt,
- die Verweilzeit unter 4,5 s, bevorzugt unter 1 s, liegt und
- der pH bei pH 10 gehalten wird, zur Herstellung eines Hydrotalcitmaterials mit einem Mg/Al-Molverhältnis im Bereich von 1 bis 5, umfassend Kristallite mit einer Größe von 3 nm bis 4 nm, die zu Kristallen mit einer Größe von 20 nm bis 45 nm mit im Wesentlichen glatten Oberflächen und einer Oberfläche von 0,1 - 3 m² · g⁻¹ vereinigt sind.

6. Verfahren nach Anspruch 1, wobei
- die Lösungen, die in den kleinen Reaktor eingespeist werden, ein Gemisch aus einer wässerigen Lösung von Mg(NO₃)₂ und einer wässerigen Lösung von Al(NO₃)₃ und einer zweiten wässerigen Lösung des Fällungsmittels (NaOH + Na₂CO₃) bei Raumtemperatur sind,
- die Rührgeschwindigkeit im Bereich von 300 - 24.000 U/min liegt,
- die Verweilzeit 12 bis 18 s beträgt und
- der pH bei pH 10 gehalten wird, zur Herstellung eines Hydrotalcitmaterials mit einem Mg/Al-Molverhältnis im Bereich von 1 bis 5, umfassend Kristallite mit einer Größe von 5 nm bis 11 nm, die zu tafelförmigen Teilchen mit einer Länge von 20 bis 30 nm und einer Dicke von 10 bis 20 nm mit einer Porengrößenverteilung von 5 bis 200 nm, Oberflächen im Bereich von 85 bis 130 m² · g⁻¹ und einem Gesamt-Porenvolumen von 0,30 bis 0,78 cm³ · g⁻¹ vereinigt sind.

7. Verfahren nach Anspruch 1, wobei
- die Lösungen, die in den kleinen Reaktor eingespeist werden, eine wässerige Lösung von Al(NO₃)₃, eine wässerige Lösung von einem M-Nitrat und/oder einem N-Nitrat, wobei M ein zweiwertiges Metallion, ausgewählt aus einem von: Ni²⁺, Co²⁺, Mn²⁺, Cu²⁺ ist, und N ein dreiwertiges Metallion, ausgewählt aus einem von: La³⁺, Fe³⁺ ist, und eine wässerige Lösung von (NH₄)₂CO₃ bei einer Temperatur von 333 K sind,
- die Rührgeschwindigkeit 13.500 U/min beträgt,
- die Verweilzeit 18 s beträgt und
- der pH bei pH 7,5 bis 8 gehalten wird, zur Herstellung eines Dawsonitmaterials mit der allgemeinen Formel NH₄⁺MₓN_{y}Al_{1-x-y}(CO₃)(OH)₂, worin x und y unabhängig 0 bis 1 sind, umfassend Kristallite mit einer Größe von 8 nm bis 12 nm, die zu Teilchen mit einer Größe von 20 bis 30 nm, einer Porengrößenverteilung von 4 bis 20 nm, einer Oberfläche von mindestens 650 m² · g⁻¹ und einem Gesamt-Porenvolumen von mindestens 1,7 cm³ · g⁻¹ stens 650 m² · g⁻¹ und einem Gesamt-Porenvolumen von mindestens 1,7 cm³ · g⁻¹ vereinigt sind.

8. Verfahren nach Anspruch 1, wobei
- die Lösungen, die in den kleinen Reaktor eingespeist werden, eine wässerige Lösung von Al(NO₃)₃, eine wässerige Lösung von einem M-Nitrat und/oder einem N-Nitrat, wobei M ein zweiwertiges Metallion, ausgewählt aus einem von: Ni²⁺, Co²⁺, Mn²⁺, Cu²⁺ ist, und N ein dreiwertiges Metallion, ausgewählt aus einem von: La³⁺, Fe³⁺ ist, und eine wässerige Lösung von (NH₄)₂CO₃ bei einer Temperatur von 333 K sind,
- die Rührgeschwindigkeit 13.000 U/min beträgt,
- die Verweilzeit 18 s beträgt, und
- der pH bei pH 7,5 bis 8 gehalten wird, zur Herstellung eines Aluminiumoxidmaterials, das gegebenenfalls modifiziert ist mit mindestens einem Metall, mit einer Oberfläche von 350 bis 550 m² · g⁻¹ und einem Gesamt-Porenvolumen von 0,9 bis 1,6 cm³ · g⁻¹, umfassend Kristallite mit einer Größe von weniger als 2 nm, die zu Feinstteilchen mit einer durchschnittlichen Einheitsgröße von weniger als 10 nm vereinigt sind.

## Revendications

1. Procédé de préparation de matériaux solides de taille nanométrique par précipitation continue sous une température constante et à un pH constant, dans lequel le procédé comprend :
- alimenter un petit réacteur ayant un volume de 0,5 à 100 mL avec au moins deux solutions à pression atmosphérique avec des débits d'alimentation régulés pour obtenir un temps de séjour présélectionné dans le petit réacteur de moins de 36 s,
- agiter les solutions dans le petit réacteur par un élément rotatif pour obtenir un nombre de Reynolds de roue supérieur à 10⁴, et
- maintenir un pH constant du mélange en utilisant une sonde de pH en ligne située à la sortie du petit réacteur qui régule le débit d'alimentation des solutions en conséquence.

2. Procédé selon la revendication 1, dans lequel les matériaux solides de taille nanométrique sont choisis dans le groupe comprenant les catalyseurs, les précurseurs de catalyseurs, les supports de catalyseurs et les précurseurs de supports de catalyseurs.

3. Procédé selon la revendication 2, dans lequel les matériaux solides de taille nanométrique sont choisis dans le groupe comprenant les catalyseurs oxyde, les hydroxydes, les oxydes hydratés, les hydroxycarbonates et les oxohydroxydes, oxoperoxohydroxydes, nitrures, carbures et sulfures de métaux.

4. Procédé selon la revendication 2 ou 3, comprenant en outre une étape d'activation choisie dans le groupe comprenant un vieillissement classique, une irradiation par des micro-ondes, un traitement aux ultrasons, un traitement thermique ou l'une des combinaisons de celles-ci.

5. Procédé selon la revendication 1, dans lequel
- les solutions alimentant le petit réacteur sont un mélange d'une solution aqueuse de Mg(NO₃)₂ et d'une solution aqueuse de Al(NO₃)₃, et une seconde solution aqueuse de l'agent précipitant (NaOH + Na₂CO₃) à température ambiante,
- la vitesse d'agitation est dans la plage de 300 à 24 000 tr/min,
- le temps de séjour est en dessous de 4,5 s, de préférence en dessous de 1 s, et
- le pH est maintenu à 10, pour la préparation d'un matériau hydrotalcite avec un rapport molaire Mg/Al dans la plage allant de 1 à 5, comprenant des cristallites ayant une taille de 3 nm à 4 nm assemblés en cristaux d'une taille allant de 20 nm à 45 nm, avec des surfaces sensiblement lisses et une superficie de 0,1 à 3 m² g⁻¹.

6. Procédé selon la revendication 1, dans lequel
- les solutions alimentant le petit réacteur sont un mélange d'une solution aqueuse de Mg(NO₃)₂ et d'une solution aqueuse de Al(NO₃)₃, et une seconde solution aqueuse de l'agent précipitant (NaOH + Na₂CO₃) à température ambiante,
- la vitesse d'agitation est dans la plage de 300 à 24 000 tr/min,
- le temps de séjour est de 12 à 18 s, et
- le pH est maintenu à 10, pour la préparation d'un matériau hydrotalcite avec un rapport molaire Mg/Al dans la plage allant de 1 à 5, comprenant des cristallites ayant une taille allant de 5 nm à 11 nm assemblés en particules lamellaires ayant une taille allant de 20 à 30 nm en longueur et de 10 à 20 nm en épaisseur, avec une distribution de taille de pore allant de 5 à 200 nm, des superficies dans la plage allant de 85 à 130 m² g⁻¹ et un volume de pore total allant de 0,30 à 0,78 cm³ g⁻¹.

7. Procédé selon la revendication 1, dans lequel
- les solutions alimentant le petit réacteur sont une solution aqueuse de Al(NO₃)₃, une solution aqueuse d'un nitrate M et/ou d'un nitrate N, où M est un ion de métal divalent choisi parmi l'un des suivants : Ni2⁺, Co²⁺, Mn²⁺, Cu²⁺, et N est un ion de métal trivalent choisi parmi l'un des suivants : La³⁺, Fe³⁺, et une solution aqueuse de (NH₄)₂CO₃ à une température de 333 K,
- la vitesse d'agitation est de 13 500 tr/min,
- le temps de séjour est de 18 s, et
- le pH est maintenu entre 7,5 et 8, pour une préparation d'un matériau dawsonite de formule générale NH₄⁺MₓN_{y}Al_{1-x-y}(CO₃)(OH)₂, où x et y valent indépendamment entre 0 et 1, comprenant des cristallites ayant une taille allant de 8 nm à 12 nm assemblés en particules ayant une taille allant de 20 à 30 nm, avec une distribution de taille de pore allant de 4 à 20 nm, une superficie d'au moins 650 m² g⁻¹ et un volume de pore total d'au moins 1, 7 cm³ g⁻¹.

8. Procédé selon la revendication 1, dans lequel
- les solutions alimentant le petit réacteur sont une solution aqueuse de Al(NO₃)₃, une solution aqueuse d'un nitrate M et/ou d'un nitrate N, où M est un ion de métal divalent choisi parmi l'un des suivants : Ni²⁺, Co²⁺, Mn²⁺, Cu²⁺, et N est un ion de métal trivalent choisi parmi l'un des suivants : La³⁺, Fe³⁺, et une solution aqueuse de (NH₄)₂CO₃ à une température de 333 K,
- la vitesse d'agitation est de 13 000 tr/min,
- le temps de séjour est de 18 s, et
- le pH est maintenu entre 7,5 et 8, pour une préparation d'un matériau alumine éventuellement modifié avec au moins un métal, avec une superficie allant de 350 à 550 m² g⁻¹ et un volume de pore total d'au moins 0,9 à 1,6 cm³ g⁻¹, comprenant des cristallites ayant une taille inférieure à 2 nm assemblés en particules ultrafines ayant une taille moyenne uniforme de moins de 10 nm.
